# EUROPEAN PATENT SPECIFICATION

(11) **EP 4 534 458 B1**
(45) Date of publication and mention of the grant of the patent: **02.12.2026**
(21) Application number: 23202283.0
(22) Date of filing: 06.10.2023
(51) Int. Cl.: B65G 59/06, B65G 59/10

(54) **A DEVICE FOR SEPARATING CONTAINERS, IN PARTICULAR FOR CONTAINERS IN SECURITY INSPECTION SYSTEMS, AND A SECURITY INSPECTION SYSTEM**
VORRICHTUNG ZUM TRENNEN VON BEHÄLTERN, INSBESONDERE FÜR BEHÄLTER IN SICHERHEITSINSPEKTIONSSYSTEMEN UND SICHERHEITSINSPEKTIONSSYSTEM
DISPOSITIF DE SÉPARATION DE RÉCIPIENTS, EN PARTICULIER POUR DES RÉCIPIENTS DANS DES SYSTÈMES D'INSPECTION DE SÉCURITÉ, ET SYSTÈME D'INSPECTION DE SÉCURITÉ

(43) Date of publication of application: 09.04.2025
(73) Proprietor: Dimark Manufacture Spolka Akcyjna, 62-002 Zlotkowo (PL)
(72) Inventor: Gromada, Marek, Plewiska (PL); Lis, Mikolaj, Poznan (PL)
(74) Representative: Wroblewski, Marcin Jan

(56) References cited:
- WO-A1-2019/146093
- WO-A1-2022/183705
- CN-A- 108 263 863
- DE-U1- 29 512 674
- US-B1- 6 647 616
- US-B2- 11 479 420

## Description

### Technical field

The invention concerns a device for separating containers, in particular for containers in security inspection facilities, and a security inspection system.

### Description of prior art

From European patent application EP3936467A1, we know a tray return module for security inspection facilities used in airports. The tray return module is located in the area for collecting the personal belongings covered by security inspection, so behind the inspection machine using X-ray scanners. The tray return module comprises an input opening that allows collecting empty trays and means of returning said trays towards the area for depositing the personal belongings covered by security inspection, wherein the tray return means have the form of transfer rollers. In addition, said module comprises means of delivering empty trays from the input opening to the transfer rollers. The tray return means have the form of vertical rollers with a helical thread that enables coupling said rollers with the edges of empty trays. Furthermore, from European patent application EP3936467A1, we know a security inspection system comprising at least one such a tray return module.

From UK patent application GB2468667A, we know a tray lift that can be used for conveying trays in airports, especially in security inspection facilities. The lift comprises vertical elevator screws, each comprising a rotary shaft and a helical flange extending along the shaft. The screws are arranged in such a way that their flanges are coupled with the edges of a conveyed tray. In addition, each screw is nested on a bearing for rotation and powered by an electric motor. Furthermore, the tray lift comprises transmissions linked to said bearings, which enables rotation of the screws with a single motor.

From European patent application EP3429944A1, we know a tray transport module for security inspection facilities that comprises an upper gang of transport rollers for conveying trays from the area for depositing the personal belongings covered by security inspection to their collection area as well as a lower gang of transport rollers for conveying trays from the area for collecting the personal belongings covered by the inspection to their depositing area. The tray transfer module further comprises a set of rotary shafts and gears seated thereon that allow for conveying emptied trays from the upper gang of transport rollers to the lower gang of transport rollers. International patent application WO2022183705A1 discloses a device for separating individual trays from a tray stack in airport security systems. The device comprises a body with a space for collecting empty trays, an input opening for empty trays that is located in the upper section of said body, a tray output opening located in one of the body's side walls, and a set of transport rollers situated inside the body at a lower part of said body, wherein the transport rollers enable conveying empty trays outside said device through the output opening. The device for separating individual trays from a tray stack further comprises two gripping units for supporting the trays collected through the input opening. Each unit has two actuators with gripping elements that are located opposite each other and perpendicularly to the longitudinal axis of the set of transport rollers. Furthermore, one gripping unit is located beneath the other gripping unit. Empty trays are moved towards the transport rollers by switching the positions of the gripping elements of the gripping unit actuators.

Chinese patent application CN115367492A discloses a device for separating individual trays from a tray stack in airport security systems. The device comprises a body with a space for collecting empty trays, an input opening for empty trays that is located in the upper part of said body, a tray output transport rollers located inside the body at lower part of said body, wherein the set of transport rollers enables conveying empty trays outside said device through the output opening. The device for separating individual trays from a tray stack further comprises a gripping unit for supporting the trays collected through the input opening and a conveyor unit for conveying empty trays to the set of transport rollers. The gripping unit has two actuators with gripping elements that are located opposite each other and in parallel to the longitudinal axis of the set of transport rollers. In turn, the conveyor unit comprises two carrying arms adapted to realize vertical movement and extending perpendicularly to the longitudinal axis of the set of transport rollers. The movement of empty trays toward the transport rollers is realized by changing the positions of the gripping elements of the gripping unit actuators and by vertical movement of the conveyor unit.

American patent US6647616B1 discloses a device according to the preamble of claim 1 and a bump bonding unit including a storage, transport, and feed system for allocating trays that hold IC chips to various operations of the bump bonding unit. The bump bonding unit includes first and second tray storage and feed apparatuses that transport trays from empty stacks to full stacks and vice versa, and a transfer head for picking up an IC chip without a bump formed thereon and moving the IC chip to a bump formation location, and for picking up the IC chip with the bump formed thereon and moving the IC chip to a storage location.

The bump bonding unit also includes a bump forming unit for forming the bump on the IC chip. Each tray storage apparatus includes a carrier that moves vertically to position a stack of trays, a tray receiver that cooperates with the carrier to support a lowermost tray in the respective stack of trays, and tray holder to support and release a tray supported by the tray receiver.

The solutions known from prior art disclose a plurality of structures for devices that enable the separation of containers, in particular containers in security inspection systems, and yet it is still necessary to develop a device for separating containers with a design that provides simplification of the process of the separation of containers stacked therein. Therefore, the aim of the invention is to develop a device for separating containers with a design that provides simplification of the process of the separation of containers stacked therein.

### The essence of the invention

The object of the invention a device for separating containers, in particular for containers in security inspection systems, comprising a frame constituting the support structure of the device, a container-receiving element connected to the frame by means of a carrying system of the container-receiving element allowing the container-receiving element to move in up/down direction, a container separation and carrying system, and a drive system of the carrying system wherein the carrying system of the container-receiving element comprises at least two sliding elements connected to the container-receiving element, wherein the sliding elements are slidably seated in the frame of the device and each sliding element comprises at least one cam for cooperating with the container separation and carrying system; the container separation and carrying system connected to the frame of the device comprises at least two container separation and carrying elements adapted to move along the cams of the carrying system of the container-receiving element, wherein each of these elements comprises at least one container separation and carrying profile; wherein the device is configured in such a way that the container separation and carrying profiles in their starting position support stacked containers above the container-receiving element located in the lower part of the device, as a result of the upward movement of the container-receiving element to the end position, where the container-receiving element is located in the upper part of the device, the container separation and carrying elements move along the cams of the carrying system of the container-receiving element, thus causing a change in the position of the container separation and carrying profiles, as a result of which the stacked containers settle on the container-receiving element located in the upper part of the device, as a result of the movement of the container-receiving element down to the starting position, the container separation and carrying elements move along the cams of the carrying system of the container-receiving element in the opposite direction, thus causing the separation and carrying profiles to return to their starting position with simultaneous separation of a single container situated on the container-receiving element from the stacked containers, and in the starting position, it is possible to remove a separated container from the device. The essence of the invention is that it comprises at least one counterweight coupled with the drive system of the carrying system of the container-receiving element by means of linkages, wherein said at least one counterweight is designed to move up and down.

The application in the device for separating containers of the carrying system of the container-receiving element comprising at least two sliding elements connected to the container-receiving element, wherein the sliding elements are slidably seated in the frame of the device, where each sliding element comprises at least one cam for cooperating with the container separation and carrying system; the container separation and carrying system connected to the frame that comprises at least two container separation and carrying elements adapted to move along the cams of carrying system of the container-receiving element, where each of these elements comprises at least one container separation and carrying profile; where the device is configured in such a way that the container separation and carrying profiles in their starting position support the stacked containers above the container-receiving element located in the lower part of the device, as a result of the upward movement of the container-receiving element to the end position, where the container-receiving element is located in the upper part of the device, the container separation and carrying elements move along the cams of the carrying system of the container-receiving element, thus causing a change in the position of the container separation and carrying profiles, as a result of which the stacked containers settle on the container-receiving element located in the upper part of the device, as a result of the movement of the container-receiving element down to the starting position, the container separation and carrying elements move along the cams of the carrying system of the container-receiving element in the opposite direction, causing the separation and carrying profiles to return to their starting position with simultaneous separation of the single container situated on the container-receiving element from the stacked containers, and in the starting position, it is possible to remove the separated container from the device, provides simplification of the process of the separation of containers stacked in the said device.

The application of at least one counterweight coupled with the carrying system of the container-receiving element by means of linkages, where said at least one counterweight is designed to move up and down, ensures balancing of forces caused by the mass of the container-receiving element and acting against the drive system, which leads to an increase in the smooth operation of the drive system and its durability.

Preferably, the drive system of the carrying system comprises a drive equipped with a drive shaft located perpendicularly to the longitudinal axis of the container-receiving element, and further comprises at least two lifting supports fixed to the container-receiving element on its both sides and to the frame, at least two lifting arms fixed to the container-receiving element on its both sides, and at least two swing arms fixed to the collector on its both sides, wherein the first ends of the lifting supports are rotatably connected to the container-receiving element and the first ends of the lifting arms, and the second ends of the lifting supports are rotatably connected to the frame of the device; the second ends of the lifting arms are rotatably connected to the first ends of the swing arms, and the second ends of the swing arms are rotatably connected to the ends of the drive shaft; the rotation axes of the lifting supports, lifting arms and swing arms are oriented perpendicularly to the longitudinal axis of the container-receiving element.

The application of the drive system of the carrying system comprising the drive equipped with the drive shaft located perpendicularly to the longitudinal axis of the container-receiving element, and further comprising at least two lifting supports fixed to the container-receiving element on its both sides and to the frame, at least two lifting arms fixed to the container-receiving element on its both sides, and at least two swing arms fixed to the container-receiving element on its both sides, where the first ends of the lifting supports are rotatably connected the container-receiving element and the first ends of the lifting arms, and the second ends of the lifting supports are rotatably connected to the frame of the device; the second ends of the lifting arms are rotatably connected to the first ends of the swing arms, and the second ends of the swing arms are rotatably connected to the ends of the drive shaft; the rotation axes of the lifting supports, lifting arms and swing arms are oriented perpendicularly to the longitudinal axis of the container-receiving element, ensures an even transfer of mechanical energy to the container-receiving element.

Preferably, each separation and carrying profile is connected to the frame of the device for separating containers by means of a spring.

The application of springs for connecting the separation and carrying profiles to the frame of the device for separating containers facilitates the movement of container separation and carrying elements along the cams of the carrying system of the container-receiving element, which leads to an increase in the smoothness of the movement of the container separation and carrying elements.

Preferably, the device according to the invention comprises a container input opening for containers located in the upper part of the device and at least one first motion sensor located in one of the corners of the input opening, where said at least one first motion sensor is adapted to detect containers put into the device.

The application of at least one first motion sensor located in one corner of the input opening located in the upper part of the device for separating containers, where said at least one first motion sensor is adapted to detect containers put into the device, prevents excessive stacking of containers collected by the container separation and carrying system.

Preferably, the device according to the invention comprises an output opening for removing separated containers from that device by means of the container-receiving element and at least one second motion sensor located close to the container-receiving element in front of the output opening, wherein at least one second motion sensor is adapted to detect separated containers removed from the device.

The application of at least one second motion sensor located close to the container-receiving element in front of the output opening for removing separated containers from the device according to the invention by means of the container-receiving element and adapted to detect separated containers removed from said device prevents unacceptable stacking of the containers collected by the container-receiving element.

Preferably, the contact surface of each of the cams in the carrying system of the container-receiving element is shaped in such a way that it comprises a flat part and an oblique part inclined outwardly.

Shaping each of the cams of the support system of the container-receiving element so that it comprises a flat part and an oblique part inclined outwardly ensures optimization of the direction of the movement of container separation and carrying elements along said cams.

Preferably, the container-receiving element is provided with transport rollers.

The application of the container-receiving element provided with the transport rollers facilitates the removal of separated containers from the device for separating containers.

Preferably, at least two container separation and carrying elements are adapted to move along the cams of the carrying system of the container-receiving element by means of bearings.

The adaptation of the at least two container separation and carrying elements to move along the cams of the carrying system of the container-receiving element by means of the bearings ensures the reduction of the contact surface between said container separation and carrying elements and the cams and, as a result, leads to an increase of the service life of the device for separating containers.

Preferably, at least two sliding elements of the carrying system of the container-receiving element are slidably seated in the frame of the device by means of guides.

Preferably, at least two sliding elements of the carrying system of the container-receiving element are connected to the drive system by means of bearings.

Preferably, the drive in the drive system has the form of an electric motor.

The invention further relates to a security inspection system that comprises at least one device for separating containers according to the invention.

### Advantages of the invention

The design of the device for separating containers according to the invention, in particular the design of the drive system, enables the device to use a single drive, resulting in reduction the costs of manufacturing such a device.

The design of the device for separating containers according to the invention, in particular the disclosed mechanical coupling of the carrying system and the container separation and carrying system ensures reduction of the risk of failure of such a device due to the simplification of said design compared to the solutions known from prior art.

The design of the device for separating containers according to the invention allows for simplifying the removal of separated container from the device.

### Description of drawing figures

The subject of the invention is presented in embodiments in a drawing, wherein:

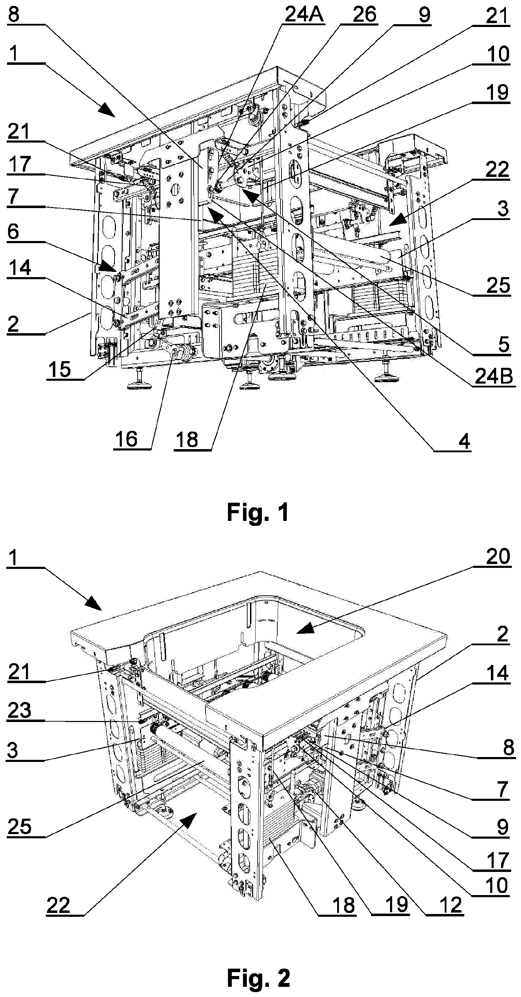

- Fig. 1: shows the device for separating containers according to the invention without the casing walls, in a perspective view from the bottom,
- Fig. 2: shows the device for separating containers according to the invention without the casing walls, in a perspective view from top,
- Fig. 3: shows the device for separating containers according to the invention with visible containers in a top view,
- Fig. 4: shows the device for separating containers according to the invention without the casing walls, in a side view,
- Fig. 5: shows the device for separating containers according to the invention with visible containers in a longitudinal section,
- Fig. 6A: shows the device for separating containers according to the invention in a cross section with stacked containers supported by the separation and carrying profiles,
- Fig. 6B: shows the device for separating containers according to the invention in a cross section with stacked containers positioned in the container-receiving element,
- Fig. 6C: shows the device for separating containers according to the invention in a cross section with a separated container positioned on the container-receiving element,
- Fig. 7: shows a fragment of the security inspection system according to the invention in a perspective view.

### Detailed description of the invention

### Device for separating containers T

A device for separating containers 1, in particular for containers in security inspection system, comprises a frame 2 constituting the support structure of the device 1, a container-receiving element 3 connected to the frame 2 by means of the carrying system 4 of the container-receiving element 3 allowing the container-receiving element 3 to move in up/down direction, a container separation and carrying system 5, and a drive system 6 of the carrying system 4.

The carrying system 4 of the container-receiving element 3 comprises sliding elements 7 connected to the container-receiving element 3. The sliding elements 7 are slidably seated on the frame 2 of the device 1, on both sides of the container-receiving element 3, by means of guides 27, for example slide guides. Each sliding element 7 comprises two cams 8 for cooperating with the container separation and carrying system 5. In other embodiments of the device for separating containers 1, each sliding element 7 can comprise one cam 8 for cooperating with the container separation and carrying system 5. The sliding elements 7 are connected to the drive system 6 of the carrying system 4 by means of bearings 28.

The container separation and carrying system 5 connected to the frame 2 of the device 1 comprises container separation and carrying elements 9, for example in the form of rolls, adapted to move along the cams 8 of the carrying system 4 of the container-receiving element 3. The container separation and carrying elements 9 can be adapted to move along the cams 8 of the carrying system 4 of the container-receiving element 3 by means of bearings 26, for example slide bearings. The adaptation of the container separation and carrying elements 9 to move along the cams 8 of the carrying system 4 of the container-receiving element 9 by means of the bearings 26 ensures the reduction of the contact surface between said container separation and carrying elements 9 and the cams 8 and, as a result, leads to an increase of the service life of the device for separating containers 1. In addition, the contact surface of each of the cams 8 in the carrying system 4 of the container-receiving element 3 is shaped in such a way that it comprises a flat part 24A and an oblique part 24B inclined outwardly. The disclosed shaping of each cam 8 ensures optimization of the direction of the movement of the container separation and carrying elements 9 along said cams 8. Furthermore, each container separation and carrying element 9 comprises container separation and carrying profiles 10. Each separation and carrying profile 10 is connected to the frame 2 of the device for separating containers 1 by means of a spring 17, for example tension spring. The application of springs 17 for connecting the container separation and carrying profiles 10 to the frame 2 of the device for separating containers 1 facilitates the movement of container separation and carrying elements 9 along the cams 8 of the carrying system 4 of the container-receiving element 3, which leads to an increase in the smoothness of the movement of the container separation and carrying elements 9.

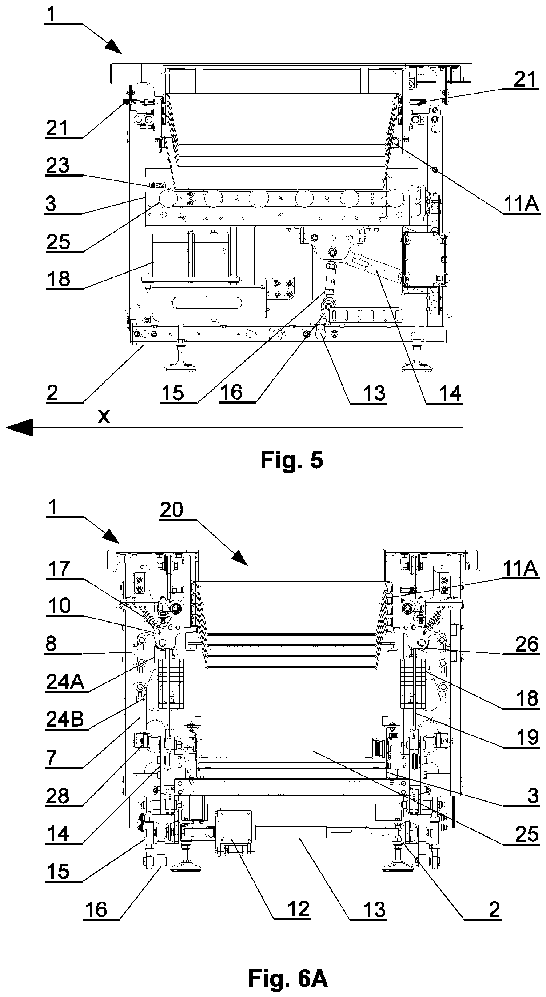

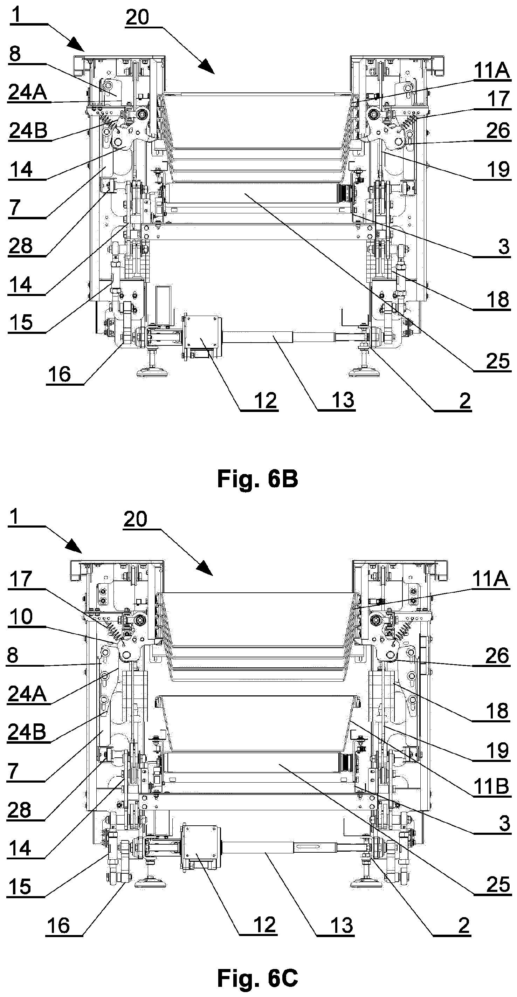

The device 1 is configured in such a way that the container separation and carrying profiles 10 in their starting position support stacked containers 11A above the container-receiving element 3 located in the lower part of the device 1 (Fig. 6A), as a result of the upward movement of the container-receiving element 3 to the end position, where the container-receiving element 3 is located in the upper part of the device 1, the container separation and carrying elements 9 move along the cams 8 of the carrying system 4 of the container-receiving element 3, thus causing a change in the position of the container separation and carrying profiles 10, as a result of which the stacked containers 11A settle on the container-receiving element 3 located in the upper part of the device 1 (Fig. 6B), as a result of the movement of the container-receiving element 3 down to the starting position, the container separation and carrying elements 9 move along the cams 8 of the carrying system 4 of the container-receiving element 3 in the opposite direction, thus causing the separation and carrying profiles 10 to return to their starting position with simultaneous separation of a single separated container 11B situated on the container-receiving element 3 from the stacked containers 11A (Fig. 6C), and in the starting position, it is possible to remove a separated container 11B from the device 1.

The application in the device for separating containers 1 of the carrying system 4 of the container-receiving element 3 comprising sliding elements 7 connected to the container-receiving element 3, wherein the sliding elements 7 are slidably seated in the frame 2 of the device 1, where each sliding element 7 comprises cams 8 for cooperating with the container separation and carrying system 5; the container separation and carrying system 5 connected to the frame 2 that comprises container separation and carrying elements 9 adapted to move along the cams 8 of carrying system 4 of the container-receiving element 3, where each of these elements 9 comprises container separation and carrying profiles 10; where the device 1 is configured in such a way that the container separation and carrying profiles 10 in their starting position support the stacked containers 10A above the container-receiving element 3 located in the lower part of the device 1, as a result of the upward movement of the container-receiving element 3 to the end position, where the container-receiving element 3 is located in the upper part of the device 1, the container separation and carrying elements 9 move along the cams 8 of the carrying system 4 of the container-receiving element 3, thus causing a change in the position of the container separation and carrying profiles 10, as a result of which the stacked containers 11A settle on the container-receiving element 3 located in the upper part of the device 1, as a result of the movement of the container-receiving element 3 down to the starting position, the container separation and carrying elements 9 move along the cams 8 of the carrying 5 system 4 of the container-receiving element 3 in the opposite direction, causing the separation and carrying profiles 10 to return to their starting position with simultaneous separation of the single container 10B situated on the container-receiving element 3 from the stacked containers 11A, and in the starting position, it is possible to remove the separated container 11B from the device 1, provides simplification of the process of the separation of containers stacked 11A in the said device 1. In addition, the design of the device for separating containers 1, in particular the disclosed mechanical coupling of the carrying system 4 of the container-receiving element 3 and the container separation and carrying system 5 ensures reduction of the risk of failure of such a device due to the simplification of said design compared to the solutions known from prior art.

The drive system 6 of the carrying system 4 comprises a drive 12, for example in the form of an electric motor, equipped with a drive shaft 13 located perpendicularly to the longitudinal axis x of the container-receiving element 3, and further comprises lifting supports 14 fixed to the container-receiving element 3 on its both sides and to the frame 2 of the device 1, lifting arms 15 fixed to the container-receiving element 3 on its both sides, and swing arms 16 fixed to the collector 3 on its both sides. The first ends of the lifting supports 14 are rotatably connected to the container-receiving element 3 and the first ends of the lifting arms 15, and the second ends of the lifting supports 14 are rotatably connected to the frame 2 of the device 1. The second ends of the lifting arms 15 are rotatably connected to the first ends of the swing arms 16, and the second ends of the swing arms 16 are rotatably connected to the ends of the drive shaft 13. In turn, the rotation axes of the lifting supports 14, lifting arms 15 and swing arms 16 are oriented perpendicularly to the longitudinal axis x of the container-receiving element 3. The application of the drive system 6 of the carrying system 4 comprising the drive 12, for example in the form of an electric motor, equipped with the drive shaft 13 located perpendicularly to the longitudinal axis x of the container-receiving element 3, and further comprising lifting supports 14 fixed to the container-receiving element 3 on its both sides and to the frame 2 of the device 1, lifting arms 15 fixed to the container-receiving element 3 on its both sides, and swing arms 16 fixed to the container-receiving element 3 on its both sides, where the first ends of the lifting supports 14 are rotatably connected the container-receiving element 3 and the first ends of the lifting arms 15, and the second ends of the lifting supports 14 are rotatably connected to the frame 2 of the device 1; the second ends of the lifting arms 15 are rotatably connected to the first ends of the swing arms 16, and the second ends of the swing arms 16 are rotatably connected to the ends of the drive shaft 13; the rotation axes of the lifting supports 14, lifting arms 15 and swing arms 16 are oriented perpendicularly to the longitudinal axis x of the container-receiving element 3, ensures an even transfer of mechanical energy to the container-receiving element 3.

The device for separating containers 1 comprises counterweights 18 located on both sides of the container-receiving element 3 coupled with the drive system 6 of the carrying system 4 by means of linkages 19. For example, the linkages 19 can have the form of steel cords or polypropylene cords. The counterweights 18 are adapted to move up and down, so perpendicularly to the longitudinal axis x of the container-receiving element 3. The application of counterweights 18 coupled with the carrying system 4 of the container-receiving element 3 by means of linkages 19, where said counterweights 18 are adapted to move up and down, ensures balancing of forces caused by the mass of the container-receiving element 3 and acting against the drive system 6, which leads to an increase in the smooth operation of the drive system 6 and its durability.

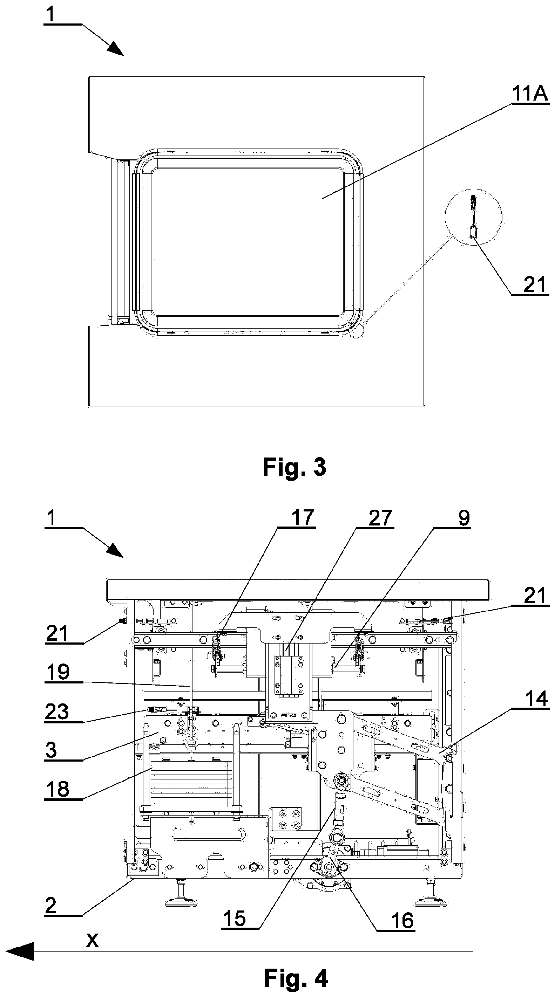

In addition, the device for separating containers 1 comprises an input opening 20 for containers located in the upper part of the device 1 and the first motion sensors 21 located in the corners of the input opening 20 (Fig. 3) and adapted to detect containers put into the device 1. The application of the first motion sensors 21 located in the corners of the input opening 20 located in the upper part of the device for separating containers 1, where said first motion sensors 21 are adapted to detect containers put into the device 1, prevents excessive stacking of containers 11A collected by the container separation and carrying system 5.

The device for separating containers 1 further comprises an output opening 22 for removing separated containers 11B from the device 1 by means of the container-receiving element 3 and a second motion sensor 23 located close to the container-receiving element 3 in front of the output opening 22, wherein the second motion sensor 23 is adapted to detect separated containers 11B removed from the device 1. The application of the second motion sensor 23 located close to the container-receiving element 3 in front of the output opening 22 for removing separated containers from the device 1 by means of the container-receiving element 3 and adapted to detect separated containers 11B removed from said device 1 prevents unacceptable stacking of the containers 11A collected by the container-receiving element 3. The container-receiving element 3 is provided with transport rollers 25.

The application of the container-receiving element 3 provided with the transport rollers 25 facilitates the removal of separated containers 11B from the device for separating containers 1.

### Security inspection system

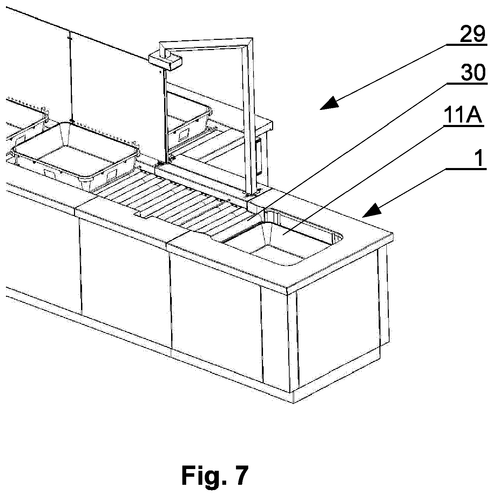

The security inspection system 29 (Fig. 7), for example an airport security inspection system, comprises the devices for separating containers 1 according to the invention. Such a security inspection system can be used, for example, in airports or railway terminals. In the system, containers are delivered to the input opening 20 of the container device 1 by means of upper transport rollers 30.

### Designations:

1- device for separating containers
2 - frame
3 - container-receiving element
4 - carrying system
5 - container separation and carrying system
6 - drive system
7 - sliding elements
8 - cam for cooperating with the container separation and carrying system
9 - container separation and carrying elements
10 - container separation and carrying profile
11A - stacked containers
11B -container
12 - drive
13 - drive shaft
14 - lifting support
15 - lifting arm
16 - swing arm
17 - spring
18 - counterweight
19 - linkage
20 - input opening
21 - first motion sensor
22 - output opening
23 - second motion sensor
24A - flat part of the cam
24B - oblique part of the cam
25 - transport rollers
26 - bearings
27 - guides
28 - bearings
29 - security inspection system
30 - upper transport rollers

## Claims

1. A device for separating containers (1), in particular for containers in security inspection systems, comprising:
- a frame (2) constituting the support structure of the device (1),
- a container-receiving element (3) connected to the frame (2) by means of a carrying system (4) of the container-receiving element (3) allowing the container-receiving element (3) to travel in up/down direction,
- a container separation and carrying system (5), and
- a drive system (6) of the carrying system (4),
wherein
- the carrying system (4) of the container-receiving element (3) comprises at least two sliding elements (7) connected to the container-receiving element (3), wherein each sliding element (7) comprises at least one cam (8) for cooperating with the container separation and carrying system (5);
- the container separation and carrying system (5) connected to the frame (2) of the device (1) comprises at least two container separation and carrying elements (9) adapted to move along the cams (8) of the carrying system (4) of the container-receiving element (3), wherein each of these elements (9) comprises at least one container separation and carrying profile (10);
wherein the device (1) is configured in such a way that
- the container separation and carrying profiles (10) in their starting position support stacked containers (11A) above the container-receiving element (3) located in the lower part of the device (1),
- as a result of the upward movement of the container-receiving element (3) to the end position, where the container-receiving element (3) is located in the upper part of the device (1), the container separation and carrying elements (9) move along the cams (8) of the carrying system (4) of the container-receiving element (3), thus causing a change in the position of the container separation and carrying profiles (10), as a result of which the stacked containers (11A) settle on the container-receiving element (3) located in the upper part of the device (1),
- as a result of the movement of the container-receiving element (3) down to the starting position, the container separation and carrying elements (9) move along the cams (8) of the carrying system (4) of the container-receiving element (3) in the opposite direction, thus causing the container separation and carrying profiles (10) to return to the starting position with simultaneous separation of a single container (11B) situated on the container-receiving element (3) from the stacked containers (11A),
- in the starting position, it is possible to remove the separated container (11B) from the device (1)
**characterized in that**
- the sliding elements (7) are slidably seated in the frame (2) of the device (1)
- said device further comprises at least one counterweight (18) coupled with the drive system (6) of the carrying system (4) of the container-receiving element (3) by means of linkages (19), wherein the at least one counterweight (18) is designed to move up and down.

2. The device for separating containers (1) according to claim 1, **characterized in that** the drive system (6) of the carrying system (4) comprises a drive (12) equipped with a drive shaft (13) located perpendicularly to the longitudinal axis of the container-receiving element (3), and further comprises at least two lifting supports (14) fixed to the container-receiving element (3) on its both sides and to the frame (2) of the device (1), at least two lifting arms (15) fixed to the container-receiving element (3) on its both sides, and at least two swing arms (16) fixed to the container-receiving element (3) on its both sides, wherein
- the first ends of the lifting supports (14) are rotatably connected to the container-receiving element (3) and the first ends of the lifting arms (15), and the second ends of the lifting supports (14) are rotatably connected to the frame (2) of the device (1);
- the second ends of the lifting arms (15) are rotatably connected to the first ends of the swing arms (16), and the second ends of the swing arms (16) are rotatably connected to the ends of the drive shaft (13);
- the rotation axes of the lifting supports (14), lifting arms (15) and swing arms (16) are oriented perpendicularly to the longitudinal axis of the container-receiving element (3).

3. The device for separating containers according to claim 1 or 2, **characterized in that** each of container separation and carrying profiles (10) is connected to the frame (2) of the device for separating containers (1) by means of a spring (17).

4. The device for separating containers according to any of the previous claims, **characterized in that** it comprises an input opening (20) for containers located in the upper part of the device (1) and at least one first motion sensor (21) located in one of the corners of the input opening (20), wherein said at least one first motion sensor (21) is adapted to detect containers put into the device (1).

5. The device for separating containers according to any of the previous claims, **characterized in that** it comprises an output opening (22) for removing separated containers (11B) from the device (1) by means of the container-receiving element (3) and at least one second motion sensor (23) located close to the container-receiving element (3) in front of the output opening (22), wherein the at least one second motion sensor (23) is adapted to detect separated containers (11B) removed from the device (1).

6. The device for separating containers according to any of the previous claims, **characterized in that** the contact surface of each of the cams (8) in the carrying system (4) of the container-receiving element (3) is shaped in such a way that it comprises a flat part (24A) and an oblique part (24B) inclined outwardly.

7. The device for separating containers according to any of the previous claims, **characterized in that** the container-receiving element (3) is provided with transport rollers (25).

8. The device for separating containers according to any of the previous claims, **characterized in that** at least two container separation and carrying elements (9) are adapted to move along the cams (8) of the carrying system (4) of the container-receiving element (3) by means of bearings (26).

9. The device for separating containers according to any of the previous claims, **characterized in that** the at least two sliding elements (7) of the carrying system (4) of the container-receiving element (3) are slidably seated in the frame (2) of the device (1) by means of guides (27).

10. The device for separating containers according to any of the previous claims, **characterized in that** the at least two sliding elements (7) of the carrying system (4) of the container-receiving element (3) are connected to the drive system (6) of the carrying system (4) by means of bearings (28).

11. The device for separating containers according to any of the previous claims, **characterized in that** the drive (12) of the drive system (6) has a form of an electric motor.

12. A security inspection system (29) comprising at least one device for separating containers (1) according to any of claims 1 to 11.

## Patentansprüche

1. Vorrichtung zum Trennen von Behältern (1), insbesondere für Behälter in Sicherheitskontrollsystemen, umfassend:
- einem Rahmen (2), der die Tragkonstruktion der Vorrichtung (1) bildet,
- einem Behälteraufnahmeelement (3), das über ein Transportsystem (4) des Behälteraufnahmeelements (3) mit dem Rahmen (2) verbunden ist, wodurch das Behälteraufnahmeelement (3) in Auf- und Abwärtsrichtung verfahren werden kann,
- einem Behältertrenn- und -transportsystem (5) sowie
- einem Antriebssystem (6) des Transportsystems (4),
wobei
- das Transportsystem (4) des Behälteraufnahmeelements (3) mindestens zwei mit dem Behälteraufnahmeelement (3) verbundene Gleitelemente (7) umfasst, wobei jedes Gleitelement (7) mindestens einen Nocken (8) zum Zusammenwirken mit dem Behältertrenn- und -transportsystem (5) aufweist;
- das mit dem Rahmen (2) der Vorrichtung (1) verbundene Behältertrenn- und - transportsystem (5) mindestens zwei Behältertrenn- und -transportelemente (9) umfasst, die so ausgelegt sind, dass sie sich entlang der Nocken (8) des Transportsystems (4) des Behälteraufnahmeelements (3) bewegen können, wobei jedes dieser Elemente (9) mindestens ein Behältertrenn- und -transportprofil (10) umfasst;
wobei die Vorrichtung (1) so konfiguriert ist, dass
- die Behältertrenn- und -transportprofile (10) in ihrer Ausgangsposition gestapelte Behälter (11A) über dem Behälteraufnahmeelement (3), das sich im unteren Teil der Vorrichtung (1) befindet, stützen,
- infolge der Aufwärtsbewegung des Behälteraufnahmeelements (3) in die Endposition, in der sich das Behälteraufnahmeelement (3) im oberen Teil der Vorrichtung (1) befindet, sich die Behältertrenn- und -transportelemente (9) entlang der Nocken (8) des Transportsystems (4) des Behälteraufnahmeelements (3) bewegen, wodurch eine Positionsänderung der Behältertrenn- und -transportprofile (10) bewirkt wird, wodurch sich die gestapelten Behälter (11A) auf dem im oberen Teil der Vorrichtung (1) befindlichen Behälteraufnahmeelement (3) absetzen,
- infolge der Abwärtsbewegung des Behälteraufnahmeelements (3) in die Ausgangsposition sich die Behältertrenn- und -transportelemente (9) entlang der Nocken (8) des Transportsystems (4) des Behälteraufnahmeelements (3) in die entgegengesetzte Richtung bewegen, wodurch die Behältertrenn- und -transportprofile (10) in die Ausgangsposition zurückkehren und gleichzeitig ein einzelner Behälter (11B), der sich auf dem Behälteraufnahmeelement (3) befindet, von den gestapelten Behältern (11A) getrennt wird,
- in der Ausgangsposition der abgetrennte Behälter (11B) aus der Vorrichtung (1) entnommen werden kann
**dadurch gekennzeichnet, dass**
- die Gleitelemente (7) im Rahmen (2) der Vorrichtung (1) verschiebbar gelagert sind
- die Vorrichtung ferner Folgendes umfasst: mindestens ein Gegengewicht (18), das über Gestänge (19) mit dem Antriebssystem (6) des Transportsystems (4) des Behälteraufnahmeelements (3) verbunden ist, wobei das mindestens eine Gegengewicht (18) so ausgelegt ist, dass es sich auf und ab bewegen kann.

2. Vorrichtung zum Trennen von Behältern (1) nach Anspruch 1, **dadurch gekennzeichnet, dass** das Antriebssystem (6) des Transportsystems (4) einen Antrieb (12) umfasst, der mit einer senkrecht zur Längsachse des Behälteraufnahmeelements (3) angeordneten Antriebswelle (13) ausgestattet ist, und ferner mindestens zwei Hubstützen (14) umfasst, die an beiden Seiten des Behälteraufnahmeelements (3) sowie am Rahmen (2) der Vorrichtung (1) befestigt sind, mindestens zwei an dem Behälteraufnahmeelement (3) auf dessen beiden Seiten befestigte Hubarme (15) sowie mindestens zwei an dem Behälteraufnahmeelement (3) auf dessen beiden Seiten befestigte Schwenkarme (16) umfasst, wobei
- die ersten Enden der Hubstützen (14) drehbar mit dem Behälteraufnahmeelement (3) und den ersten Enden der Hubarme (15) verbunden sind, und die zweiten Enden der Hubstützen (14) drehbar mit dem Rahmen (2) der Vorrichtung (1) verbunden sind;
- die zweiten Enden der Hubarme (15) drehbar mit den ersten Enden der Schwenkarme (16) verbunden sind, und die zweiten Enden der Schwenkarme (16) drehbar mit den Enden der Antriebswelle (13) verbunden sind;
- die Drehachsen der Hubstützen (14), der Hubarme (15) und der Schwenkarme (16) senkrecht zur Längsachse des Behälteraufnahmeelements (3) ausgerichtet sind.

3. Vorrichtung zum Trennen von Behältern nach Anspruch 1 oder 2, **dadurch gekennzeichnet, dass** jedes der Behältertrenn- und -transportprofile (10) mittels einer Feder (17) mit dem Rahmen (2) der Vorrichtung zum Trennen von Behältern (1) verbunden ist.

4. Vorrichtung zum Trennen von Behältern nach einem der vorstehenden Ansprüche, **dadurch gekennzeichnet, dass** sie eine im oberen Teil der Vorrichtung (1) angeordnete Einführöffnung (20) für Behälter und mindestens einen ersten Bewegungssensor (21) umfasst, der in einer der Ecken der Einführöffnung (20) angeordnet ist, wobei der mindestens eine erste Bewegungssensor (21) dazu ausgelegt ist, in die Vorrichtung (1) eingebrachte Behälter zu erfassen.

5. Vorrichtung zum Trennen von Behältern nach einem der vorstehenden Ansprüche, **dadurch gekennzeichnet, dass** sie eine Auslassöffnung (22) zum Entnehmen getrennter Behälter (11B) aus der Vorrichtung (1) mittels des Behälteraufnahmeelements (3) und mindestens einen zweiten Bewegungssensor (23) umfasst, der nahe am Behälteraufnahmeelement (3) vor der Auslassöffnung (22) angeordnet ist, wobei der mindestens eine zweite Bewegungssensor (23) dazu ausgelegt ist, aus der Vorrichtung (1) entnommene, getrennte Behälter (11B) zu erfassen.

6. Vorrichtung zum Trennen von Behältern nach einem der vorstehenden Ansprüche, **dadurch gekennzeichnet, dass** die Kontaktfläche jedes der Nocken (8) im Transportsystem (4) des Behälteraufnahmeelements (3) so geformt ist, dass sie einen flachen Abschnitt (24A) und einen nach außen geneigten schrägen Abschnitt (24B) umfasst.

7. Vorrichtung zum Trennen von Behältern nach einem der vorstehenden Ansprüche, **dadurch gekennzeichnet, dass** das Behälteraufnahmeelement (3) mit Transportrollen (25) versehen ist.

8. Vorrichtung zum Trennen von Behältern nach einem der vorstehenden Ansprüche, **dadurch gekennzeichnet, dass** mindestens zwei Behältertrenn- und -transportelemente (9) so ausgebildet sind, dass sie sich mittels Lagern (26) entlang der Nocken (8) des Transportsystems (4) des Behälteraufnahmeelements (3) bewegen können.

9. Vorrichtung zum Trennen von Behältern nach einem der vorstehenden Ansprüche, **dadurch gekennzeichnet, dass** die mindestens zwei Gleitelemente (7) des Transportsystems (4) des Behälteraufnahmeelements (3) mittels Führungen (27) im Rahmen (2) der Vorrichtung (1) verschiebbar gelagert sind.

10. Vorrichtung zum Trennen von Behältern nach einem der vorstehenden Ansprüche, **dadurch gekennzeichnet, dass** die mindestens zwei Gleitelemente (7) des Transportsystems (4) des Behälteraufnahmeelements (3) über Lager (28) mit dem Antriebssystem (6) des Transportsystems (4) verbunden sind.

11. Vorrichtung zum Trennen von Behältern nach einem der vorstehenden Ansprüche, **dadurch gekennzeichnet, dass** der Antrieb (12) des Antriebssystems (6) die Form eines Elektromotors aufweist.

12. Sicherheitskontrollsystem (29), das mindestens eine Vorrichtung zum Trennen von Behältern (1) gemäß einem der Ansprüche 1 bis 11 umfasst.

## Revendications

1. Dispositif de séparation de conteneurs (1), en particulier de conteneurs utilisés dans des systèmes de contrôle de sécurité, comprenant :
- un châssis (2) constituant la structure porteuse du dispositif (1),
- un élément de réception de conteneurs (3) relié au châssis (2) au moyen d'un système de support (4) de l'élément de réception de conteneurs (3), permettant à ce dernier de se déplacer vers le haut et vers le bas,
- un système de séparation et de support des conteneurs (5), et
- un système d'entraînement (6) du système de support (4),
dans lequel
- le système de support (4) de l'élément de réception de conteneurs (3) comprend au moins deux éléments coulissants (7) reliés à l'élément de réception de conteneurs (3), chaque élément coulissant (7) comprenant au moins une came (8) destinée à coopérer avec le système de séparation et de support des conteneurs (5) ;
- le système de séparation et de support des conteneurs (5), relié au châssis (2) du dispositif (1), comprend au moins deux éléments de séparation et de support des conteneurs (9) agencés pour se déplacer le long des cames (8) du système de support (4) de l'élément de réception de conteneurs (3), chacun de ces éléments (9) comprenant au moins un profilé de séparation et de support des conteneurs (10) ;
dans lequel le dispositif (1) est configuré de telle sorte que
- les profilés de séparation et de support des conteneurs (10), dans leur position initiale, soutiennent les conteneurs empilés (11A) au-dessus de l'élément de réception des conteneurs (3) situé dans la partie inférieure du dispositif (1),
- à la suite du déplacement vers le haut de l'élément de réception de conteneurs (3) jusqu'à la position finale, dans laquelle l'élément de réception de conteneurs (3) se trouve dans la partie supérieure du dispositif (1), les éléments de séparation et de support des conteneurs (9) se déplacent le long des cames (8) du système de support (4) de l'élément de réception de conteneurs (3), provoquant ainsi un changement de position des profilés de séparation et de support des conteneurs (10), de sorte que les conteneurs empilés (11A) viennent reposer sur l'élément de réception de conteneurs (3) situé dans la partie supérieure du dispositif (1),
- à la suite du déplacement vers le bas de l'élément de réception de conteneurs (3) jusqu'à la position initiale, les éléments de séparation et de support des conteneurs (9) se déplacent en sens inverse le long des cames (8) du système de support (4) de l'élément de réception de conteneurs (3), provoquant ainsi le retour des profilés de séparation et de support des conteneurs (10) à leur position initiale et la séparation simultanée d'un conteneur individuel (11B), situé sur l'élément de réception de conteneurs (3), des conteneurs empilés (11A),
- en position initiale, il est possible de retirer du dispositif (1) le conteneur séparé (11B)
**caractérisé en ce que**
- les éléments coulissants (7) sont logés de manière coulissante dans le châssis (2) du dispositif (1)
- ledit dispositif comprend en outre au moins un contrepoids (18) relié au système d'entraînement (6) du système de support (4) de l'élément de réception de conteneurs (3) au moyen d'éléments de liaison (19), ledit au moins un contrepoids (18) étant conçu pour se déplacer vers le haut et vers le bas.

2. Dispositif de séparation de conteneurs (1) selon la revendication 1, **caractérisé en ce que** le système d'entraînement (6) du système de support (4) comprend un entraînement (12) équipé d'un arbre d'entraînement (13) disposé perpendiculairement à l'axe longitudinal de l'élément de réception de conteneurs (3), et comprend en outre au moins deux supports de levage (14) fixés à l'élément de réception de conteneurs (3), de part et d'autre de celui-ci, ainsi qu'au châssis (2) du dispositif (1), au moins deux bras de levage (15) fixés à l'élément de réception de conteneurs (3), de part et d'autre de celui-ci, et au moins deux bras oscillants (16) fixés à l'élément de réception de conteneurs (3), de part et d'autre de celui-ci, dans lequel
- les premières extrémités des supports de levage (14) sont reliées de manière pivotante à l'élément de réception de conteneurs (3) et aux premières extrémités des bras de levage (15), et les secondes extrémités des supports de levage (14) sont reliées de manière pivotante au châssis (2) du dispositif (1);
- les secondes extrémités des bras de levage (15) sont reliées de manière pivotante aux premières extrémités des bras oscillants (16), et les secondes extrémités des bras oscillants (16) sont reliées de manière pivotante aux extrémités de l'arbre d'entraînement (13);
- les axes de rotation des supports de levage (14), des bras de levage (15) et des bras oscillants (16) sont orientés perpendiculairement à l'axe longitudinal de l'élément de réception de conteneurs (3).

3. Dispositif de séparation de conteneurs selon la revendication 1 ou 2, **caractérisé en ce que** chacun des profilés de séparation et de support de conteneurs (10) est relié au châssis (2) du dispositif de séparation de conteneurs (1) au moyen d'un ressort (17).

4. Dispositif de séparation de conteneurs selon l'une quelconque des revendications précédentes, **caractérisé en ce qu'**il comprend une ouverture d'entrée (20) pour conteneurs, située dans la partie supérieure du dispositif (1), et au moins un premier capteur de mouvement (21) situé dans l'un des coins de l'ouverture d'entrée (20), ledit au moins un premier capteur de mouvement (21) étant conçu pour détecter les conteneurs introduits dans le dispositif (1).

5. Dispositif de séparation de conteneurs selon l'une quelconque des revendications précédentes, **caractérisé en ce qu'**il comprend une ouverture de sortie (22) destinée à évacuer les conteneurs séparés (11B) du dispositif (1) au moyen de l'élément de réception de conteneurs (3), ainsi qu'au moins un deuxième capteur de mouvement (23) situé à proximité de l'élément de réception de conteneurs (3), devant l'ouverture de sortie (22), ledit au moins un deuxième capteur de mouvement (23) étant conçu pour détecter les conteneurs séparés (11B) évacués du dispositif (1).

6. Dispositif de séparation de conteneurs selon l'une quelconque des revendications précédentes, **caractérisé en ce que** la surface de contact de chacune des cames (8) du système de support (4) de l'élément de réception de conteneurs (3) est conformée de manière à comprendre une partie plate (24A) et une partie oblique (24B) inclinée vers l'extérieur.

7. Dispositif de séparation de conteneurs selon l'une quelconque des revendications précédentes, **caractérisé en ce que** l'élément de réception de conteneurs (3) est muni de rouleaux de transport (25).

8. Dispositif de séparation de conteneurs selon l'une quelconque des revendications précédentes, **caractérisé en ce qu'**au moins deux éléments de séparation et de support des conteneurs (9) sont agencés pour se déplacer le long des cames (8) du système de support (4) de l'élément de réception de conteneurs (3) au moyen de paliers (26).

9. Dispositif de séparation de conteneurs selon l'une quelconque des revendications précédentes, **caractérisé en ce que** les au moins deux éléments coulissants (7) du système de support (4) de l'élément de réception de conteneurs (3) sont logés de manière coulissante dans le châssis (2) du dispositif (1) au moyen de guides (27).

10. Dispositif de séparation de conteneurs selon l'une quelconque des revendications précédentes, **caractérisé en ce que** les au moins deux éléments coulissants (7) du système de support (4) de l'élément de réception de conteneurs (3) sont reliés au système d'entraînement (6) du système de support (4) au moyen de paliers (28).

11. Dispositif de séparation de conteneurs selon l'une quelconque des revendications précédentes, **caractérisé en ce que** l'entraînement (12) du système d'entraînement (6) se présente sous la forme d'un moteur électrique.

12. Système d'inspection de sécurité (29) comprenant au moins un dispositif de séparation de conteneurs (1) selon l'une quelconque des revendications 1 à 11.
